# EUROPEAN PATENT APPLICATION

(11) **EP 2 485 190 A1**
(43) Date of publication of application: **08.08.2012**
(21) Application number: 11305111.4
(22) Date of filing: 04.02.2011
(51) Int. Cl.: G06T 11/20, G06T 3/40

(54) **Adapting the resolution of a graphic representation of metadata**

(71) Applicant: Thomson Licensing, 92130 Issy-les-Moulineaux (FR)
(72) Inventor: Theis, Oliver, 30655, Hannover (DE); Brune, Thomas, 30449, Hannover (DE); Kamphenkel, Oliver, 31275, Lehrte (DE); Koehler, Ralf, 30455, Hannover (DE)
(74) Representative: Schmidt-Uhlig, Thomas

(57) **Abstract**

A method for providing a control signal to an output unit having a maximum resolution in a predetermined direction off the output unit, wherein metadata comprising a certain number of metadata elements assigned to a digital image sequence is to be output, and wherein the number of metadata elements is greater than a maximum resolution of the output unit, the method comprising the steps of: determining a value for the maximum resolution of the output unit, generating a number of clusters, each cluster comprising a plurality of subsequent metadata elements, wherein the number of clusters does not exceed a quotient, determined by a division of the maximum resolution of the output unit by a predetermined width of a graphical element that is designated to display a representing value of a respective cluster, wherein the width of the graphical element is considered in the predetermined direction, determining the representing value for each cluster by applying a predetermined function to the metadata elements of the respective cluster, assigning the determined representing value to the respective cluster and providing the control signal to the output unit.

## Description

### FIELD OF THE INVENTION

The invention relates to a method for providing a control signal to an output unit and further to an apparatus for providing the control signal.

### BACKGROUND

Digital motion pictures, also referred to as a digital image sequence, often come along with metadata information. Preferably, metadata information is available for every single frame of the digital image sequence. Metadata is typically generated either by the camera itself or, more likely, by a real-time or non-real-time post processing algorithm. Metadata comprises a plurality of information, e.g. the noise level, image contrast or, in case of more sophisticated algorithms, a number of faces or cars or the like detected within the respective frame. However, for a 90 minutes digital movie with typically 24 frames per second a single metadata file comprises 129600 metadata elements. In professional post production environments, a human reviewer working on multiple data sets per movie or even with multiple movies having a plurality of data sets needs to inspect the metadata information for certain quality criteria. Due to the huge amount of information the human reviewer has a vital interest in optimizing the time needed to inspect the metadata.

Common techniques for displaying such large amount of data in a single plot, e.g. in a graph or bar plot, typically use downsampling in order to match the amount of data that is desired to be displayed (e.g. the more than 100000 metadata elements) to the available pixels or dots of a display unit. A display unit within the meaning of the term is e.g. a monitor especially used for display of the metadata, a graphical user interface (typically referred to as a GUI), e.g. a window that is used for that purpose. The available resolution is defined by the monitor itself, i.e. by the hardware resolution of the respective monitor or by a number of pixels inside a GUI-window that is used for display of the metadata. Apart from electronic display devices even a hard copy may be used for inspecting the metadata content, wherein the available resolution is defined by the respective printer or plotter used for production of the hardcopy having a resolution of e.g. 300 dpi.

US 2007/0285426 A1 discloses software for adapting a graphic representation of data, wherein the data that is desired to be displayed has a greater number of data points than the displaying device offers for displaying of the data. It is suggested to unify data points into clusters having different levels, wherein upon a user defined zoom-operation agglomeration or de-convolution of a respective cluster having a higher or a lower level is performed. This allows to zoom in or out of the display in a particular area and to examine data in a varying resolution. The method prevents the user from an information overload and generates a meaningful display output. In a total view, e.g. showing a general overview of the full data set, an averaging function, e.g. nearest neighborhood, bilinear or bicubic interpolation is used for reduction of the number of data points to the available number of pixels of the display.

### SUMMARY

It is an object of the invention to provide a method for providing a control signal to an output unit and an apparatus for providing the control signal, wherein display of large metadata sets is permitted and the risk of losing significant information is reduced.

In one aspect of the invention a method for providing a control signal to an output unit is provided. The output unit has a maximum resolution in a predetermined direction. Metadata that is to be displayed comprises a certain number of metadata elements and is further assigned to a digital image sequence. The number of metadata elements is greater than the maximum resolution of the output unit. The method comprises the steps of: determining a value for the maximum resolution of the output unit, generating a number of clusters, each comprising a plurality of subsequent metadata elements. The number of clusters does not exceed a quotient determined by a division of the maximum resolution of the output unit by a predetermined width of a graphical element that is designated to display a representing value of a respective cluster. The width of the graphical element is considered in the predetermined direction of the output unit. The method further comprises the step of determining the representing value for each cluster by applying a predetermined function to the metadata elements of the respective cluster. Further, the determined representing value is assigned to the respective cluster and the control signal is provided to the output unit.

The method according to the invention allows to quickly review large metadata sets for certain aspects of the digital image sequence, e.g. quality aspects. A human operator may define quality aspects by help of the predetermined function, e.g. with respect to visualization of data outliers. Further, drawbacks that are known for commonly used averaging methods that may omit or at least diminish data outliers are reduced. The method according to the invention advantageously is conservative, which means that data outliers in the metadata must not be lost during transformation. The large amount of metadata information is reduced to an available resolution provided by e.g. a CRT or LCD monitor, a GUI window on a screen or a hard copy. For the latter the respective printer or plotter used for printing the hard copy defines the available resolution. A further limit for the resolution may be the resolving power of the human eye. Data outliers that require special attention by a human operator are not lost and he or she is further capable of reviewing and evaluating the complete set of metadata quickly. The method is conservative because it preserves the complete dynamic range of the data set. Further, the operator may be capable of jumping to a specific cluster or even a single frame, e.g. by clicking or pointing into the graph when having a suitable software environment. According to an aspect of the invention, a multiple display environment may be provided. The operator is e.g. provided with a first screen or GUI window showing an overview of the whole dataset while a second screen or window provides a detailed view allowing inspection of single frame metadata. For improved user comfort a suitable indicator, e.g. a bar plot or the like, indicates the position of the detailed view inside the global view. Advantageously, the full set of metadata or even a single set of metadata that is assigned to a single frame may be inspected. Preferably, even the frame content itself may displayed for user inspection.

According to an advantageous aspect, the method provides a control signal to an output unit, wherein the metadata is a scalar value representing an attribute qualifying the content of the assigned frame. The scalar value may be e.g. a noise level, an image contrast value or even a number of faces or detected cars or the like within a certain frame inside the respective cluster. Preferably, scalar values may be presented on the ordinate of a coordinate plane while the clusters are presented side by side on the abscissa of the display, window or hardcopy.

In another aspect of the invention, the predetermined function is a max-function that determines a global maximum for the metadata elements inside the respective cluster. In other words, the max-function is applied to the metadata elements that are a part of the respective cluster only. Alternatively, the predetermined function is a min-function that determines a global minimum for the metadata elements inside the respective cluster. The max-function and the min-function are advantageous with respect to detection of data outliers. These may be of special interest, i.e. for worst or best case quality inspection and advantageously they are preserved. The negative impact of an interpolation method, i.e. bilinear, spline, etc. commonly used for image down scaling may be avoided. Their inappropriate character for the purpose of detection of outliers, due to their averaging nature, is omitted by applying a max-function on the respective elements of the cluster. The position and magnitude of data peaks are preserved; restriction known from averaging methods of the art are thus overcome.

Advantageously, the predetermined direction of the output unit is a horizontal direction. The graphical element is preferably a bar and the provided control signal is a part of a signal for displaying a bar plot. Advantageously, a bar diagram having bars being sorted in a horizontal direction is suitable for display of metadata and is comfortable for searching outliers.

According to an aspect of the invention, an apparatus for providing a control signal to an output unit is provided. The output unit, e.g. a screen or GUI window has a maximum resolution in a predetermined direction, preferably a horizontal direction. A set of metadata elements is to be displayed on the output unit, wherein the metadata is assigned to a digital image sequence. The number of metadata elements is greater than the maximum resolution of the output unit. The apparatus according to the invention is configured to: determine the value for the maximum resolution of the output unit, generate a number of clusters, wherein each cluster comprises a plurality of subsequent metadata elements and wherein the number of clusters does not exceed a quotient determined by a division of the maximum resolution of the output unit by a predetermined width of a graphical element that is designated to display a representing value of a respective cluster. The width of the graphical element is considered in the predetermined direction. Advantageously, the apparatus is further configured to determine the respective value for each cluster by applying a predetermined function to the metadata elements of the respective cluster. Further, the determined representing value is assigned to the respective cluster and the control signal is provided to the output unit by the apparatus according to the invention.

Same or similar advantages already mentioned for the method according to the invention apply to the apparatus according to the invention.

### BRIEF DESCRIPTION OF DRAWINGS

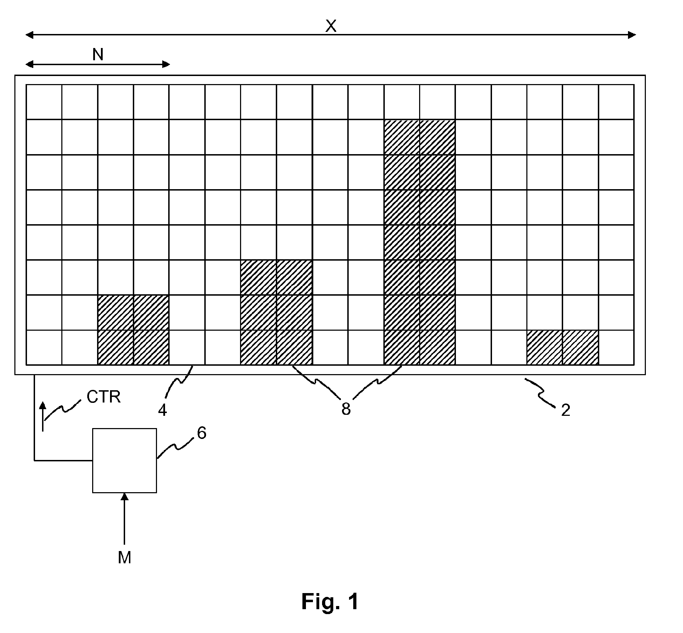

Further aspects of the invention will ensue from the following description of an example embodiment of the invention with reference to the accompanying drawing, wherein
- Fig. 1: depicts an output unit that is coupled to an apparatus for providing a control signal thereto. The output unit exemplarily presents graphical elements that represent values of respective clusters.

### DETAILED DESCRIPTION OF AN EXEMPLARY EMBODIMENT

Fig. 1 is a schematic view of an output unit 2. Exemplarily, the output unit 2 includes a screen, e.g. a TFT display 4. According to further embodiments, the output unit 2 is a GUI window or a hard copy. The TFT display 4 has a maximum resolution in a horizontal direction of X that is defined by the available horizontal pixels of the screen. According to other embodiments, this maximum resolution is defined by printable dots or available pixels per GUI window, for example. The output unit 2 is coupled to an apparatus 6 for providing a control signal CTR. Preferably, the apparatus 6 is a computer, e.g. a personal computer or a work station unit or a part of the same. The control signal CTR may be a part of a video signal that is provided to the screen by e.g. the personal computer.

Metadata information, i.e. a metadata vector M of a length S is input to the apparatus 6. The metadata vector M is assigned to a digital image sequence, e.g. a digital video. The length S of the metadata vector M means that the vector comprises a number of S metadata elements, e.g. a set of metadata comprising a number of S metadata elements. A metadata element may be a single value, e.g. a contrast of a frame or a set of data, e.g. a contrast and a brightness value. The apparatus 6 is configured to execute a method for a providing the control signal CTR to the output unit 2.

In a first step, the maximum horizontal resolution of the TFT display 4 is determined. According to the embodiment, this is a number of X horizontal pixels. Subsequently, a number N of horizontal pixels per bar 8 is read from e.g. a user input command. Alternatively, the number N of horizontal pixels per bar 8 is a predetermined value. According to the embodiment, N is equal to four pixels. In a further step, the maximum number of displayable bars 8 is determined by calculating B = FLOOR (X/N), wherein FLOOR is a round operation towards negative infinity. When the maximum number B of displayable bars 8 is known, the number of metadata elements that have to be assigned to a single cluster is calculated by:
C = CEIL (S/B) wherein CEIL is a round operation towards positive infinity. Beginning at the first metadata element of a metadata vector M, each element is assigned to a respective cluster. If a remainder of S/B > 0 (REM (S, B) > 0) exists, the last cluster will have a smaller size than the rest of the clusters.

According to the embodiment, the metadata vector M is: [1220317011], having a length S = 10. The maximum horizontal resolution of the screen X = 17, the width N of the graphical element, i.e. the horizontal pixel-width of the bar is N = 4. The desired operation is MAX. The displayable number of bars is B = FLOOR (X/N) = 4. The cluster size, i.e. the number of metadata elements that is assigned to a single cluster, is C = CEIL (S/B) = 3. The calculation of the height of the bars is determined by the following operation on the metadata vector M: G = (MAX ([122]), MAX ([031]), MAX ([701]), MAX ( [1] ) ) = [2371] wherein G is the display vector.

Depending on the operator's input or general specifications, a predetermined function is applied to each metadata element of a respective cluster. According to the embodiment, a max-function is applied. Accordingly, for each cluster, the maximum value of the metadata elements is determined and is assigned to the respective cluster. The value is displayed by the height of the bar. In other words, a high bar may indicate that the respective cluster comprises an outlier, e.g. with respect to the brightness of the assigned frame.

According to another embodiment, the method may be embedded in a further application allowing the user, e.g. by marking or clicking to the respective bar, to further inspect the cluster down to metadata information of every single frame. For display of the respective subset, the method is executed on the metadata elements of the subset only. The further application may cause a jump to the middle of the corresponding cluster and/or may further allow an adjustment of the interval. This means that the pointed portion of the metadata is again clustered, by dividing the respective part of the metadata vector M. Exemplarily, this subset has a length S* and accordingly a smaller number C* of metadata elements is assigned to a respective cluster. The value of C* is calculated by C* = CEIL (S*/B). This results in a more detailed view of the metadata vector. This detailed view may also be treated by a different user selected function, e.g. a MIN function.

If taken to the extreme, the subset that is to be displayed is small enough that no further down-sampling is necessary. By clicking or pointing into a portion of the graph G further information may be displayed e.g. within an interactive graphical user interface frame. Advantageously, the frame content is displayed.

Further advantageously, a plurality of graphs are presented on a single display, e.g. inside a plurality of GUI windows. According to a further embodiment, the metadata vector M is treated with different predetermined functions like e.g. a MIN function and a MAX function. The resulting display vectors G are preferably overlaid in a single plot and presented at the same time. This is useful for metadata inspection if a combination of different functions is suitable for identifying certain errors.

In another user scenario, where the number of horizontal pixels X is variable, i.e. in a GUI window, the method according to the invention may be repeated whenever the respective resolution of the GUI window changes. Further, in a real time scenario, when the metadata vector M is filled with data samples over time and its final length S, i.e. the maximum number of metadata elements is not yet known, the new elements of the display vector G are appended and plotted iteratively whenever a cluster of new samples, i.e. a number of new metadata elements, is received. Preferably, unknown data is distinguished from zero data e.g. through colorization or extra marking.

In an interactive graphical user environment, display of the vector G is advantageously combined with display of other information. For example, the vector G is displayed above or below a plot of an adjustable interval of the metadata vector M.

Although the invention has been described hereinabove with reference to a specific embodiment, it is not limited to this embodiment and no doubt further alternatives will occur to the skilled person that lie within the scope of the invention as claimed.

## Claims

1. A method for providing a control signal to an output unit having a maximum resolution in a predetermined direction of the output unit, wherein metadata comprising a certain number of metadata elements assigned to a digital image sequence is to be output, and wherein the number of metadata elements is greater than a maximum resolution of the output unit, the method **comprising** the steps of:
a) determining a value for the maximum resolution of the output unit,
b) generating a number of clusters, each cluster comprising a plurality of subsequent metadata elements, wherein the number of clusters does not exceed a quotient, determined by a division of the maximum resolution of the output unit by a predetermined width of a graphical element that is designated to display a representing value of a respective cluster, wherein the width of the graphical element is considered in the predetermined direction,
c) determining the representing value for each cluster by applying a predetermined function to the metadata elements of the respective cluster,
d) assigning the determined representing value to the respective cluster, and
e) providing the control signal to the output unit.

2. The method of providing a control signal to an output unit according to claim 1, **wherein** the metadata is a scalar value representing an attribute qualifying the content of an assigned frame.

3. The method of providing a control signal to an output unit according to claim 1 or 2, **wherein** the predetermined function is a max-function that determines a global maximum of the values of the metadata elements inside the respective cluster.

4. The method of providing a control signal to an output unit according to claim 1 or 2, **wherein** the predetermined function is a min-function that determines a global minimum of the values of the metadata elements inside the respective cluster.

5. The method of providing a control signal to an output unit according to one of claims 1 to 4, **wherein** the predetermined direction of the display is a horizontal direction.

6. The method of providing a control signal to an output unit according to one of claims 1 to 5, **wherein** the graphical element is a bar and the provided control signal is for displaying a bar plot.

7. The method of providing a control signal to an output unit according to one of claims 1 to 6, **wherein** the output unit is a screen, a graphical user interface to be displayed in a partition of a screen or a print- or plot-unit for generating hard copies.

8. An apparatus for providing a control signal to an output unit, the output unit having a maximum resolution in a predetermined direction, wherein metadata comprising a certain number of metadata elements assigned to a digital image sequence is to be output, and wherein the number of metadata elements is greater than the maximum resolution of the output unit in the predetermined direction, **wherein** the apparatus is configured to:
a) determine a value for the maximum resolution of the output unit,
b) generate a number of clusters, each cluster comprising a plurality of subsequent metadata elements, wherein the number of clusters does not exceed a quotient, determined by a division of the maximum resolution of the output unit by a predetermined width of a graphical element, designated to display a representing value of a respective cluster, wherein the width of the graphical element is considered in the predetermined direction,
c) determine the representing value for each cluster by applying a predetermined function to the metadata elements of the respective cluster,
d) assign the determined representing value to the respective cluster, and
e) provide the control signal to the output unit.
